# EUROPEAN PATENT APPLICATION

(11) **EP 1 256 610 A1**
(43) Date of publication of application: **13.11.2002**
(21) Application number: 02009383.7
(22) Date of filing: 07.05.2002
(51) Int. Cl.: C09D 11/02

(54) **Emulsion ink for stencil printing**

(30) Priority: 09.05.2001 JP 2001139007
(71) Applicant: RISO KAGAKU CORPORATION, Tokyo (JP)
(72) Inventor: Uozumi, Syunsuke, Riso Kagaku Cor./R&D Center, Inashiki-gun, Ibaraki-ken (JP)
(74) Representative: HOFFMANN - EITLE

(57) **Abstract**

A water-in-oil type emulsion ink for stencil printing comprising an oily phase and an aqueous phase, wherein the surface tension of the aqueous phase at 23°C is in a range of 35 to 55 mN/m, and preferably, 5 to 50% by weight of the total amount of the aqueous phase is composed of one or more of monohydric alcohols.

## Description

### BACKGROUND OF THE INVENTION

### 1. Field of the Invention

The present invention relates to an emulsion ink, and more particularly, it relates to an emulsion ink for stencil printing.

### 2. Description of the Related Art

Stencil printing has been utilized in a wide field owing to the easiness of the preparation of printing plates. The drying of the ink after the stencil printing is effected by the sinking of the ink into a printing paper and the evaporation of the moisture in an emulsion. For ensuring the fixation and drying ability of the ink, there have been proposed an emulsion ink using a solid resin (Japanese Patent Application Laid-open No. 255967/1986 filed on May 10, 1985; and Japanese Patent Application Laid-open No. 310740/1999 filed on April 27, 1998) and an emulsion ink using an oil-in-water type resin emulsion and the like in an aqueous phase (Japanese Patent Application Laid-open No. 220382/1994, filed on January 28, 1993).

However, in these conventional technologies, the property of the ink sometimes tends to be affected by temperature owing to an added resin. Moreover, in a system using an oil-in-water type resin emulsion in an aqueous phase, a complete film has not been sometimes formed under the influence of a surfactant. Furthermore, since the printing plate tends to clog, its standing stability is poor and hence its handling has been very bothersome.

Additionally, even in the case that the sinking of the ink into a print media is accelerated by lowering the viscosity of an oily phase in the emulsion, a sinking velocity of the components of the oily phase and the evaporation velocity of the components of the aqueous phase becomes a rate-determining factor of drying, which has retarded the drying of the ink.

Heretofore, an emulsion ink for stencil printing having high penetrating and drying abilities and excellent handling properties has been desired.

### SUMMARY OF THE INVENTION

The present invention provides an emulsion ink for stencil printing in which the sinking of the ink into a print media is improved by lowering the surface tension of an aqueous phase and a drying time (setting time) is shortened by enhancing the evaporating ability of the aqueous phase in the ink to improve the handling properties of printed matter.

One embodiment of the present invention is a water-in-oil type emulsion ink for stencil printing comprising an oily phase and an aqueous phase, wherein the surface tension of the aqueous phase at 23°C is in a range of 35 to 55 mN/m.

The aqueous phase preferably contains one or more of monohydric alcohols in an amount of 5 to 50% by weight.

The monohydric alcohols are preferably selected from the group consisting of methanol, ethanol, 1-propanol, 2-propanol, and tert-butyl alcohol.

The emulsion ink preferably comprises 10 to 70% by weight of an oily phase and 90 to 30% by weight of an aqueous phase.

The present disclosure relates to subject matter contained in Japanese Patent Application No.2001-139007, filed on May 9, 2001, the disclosure of which is expressly incorporated herein by reference in its entirety.

### DETAILED DESCRIPTION OF PREFERRED EMBODIMENTS

An emulsion ink of the present invention is a water-in-oil (W/O) type emulsion ink comprising an oily phase and an aqueous phase. In general, the water-in-oil (W/O) type emulsion ink can be produced by adding aqueous phase (W) components gradually to oily phase (O) components containing an emulsifier under stirring to emulsify the whole system, whereby the aqueous phase is dispersed into the oily phase in the form of fine particles, thereby manufacturing the emulsion ink.

Into the above aqueous phase (W) components, water-soluble additives such as a wetting agent, a water-soluble resin, an electrolyte, a fungicide, an antioxidant, and a water-evaporation inhibitor may be incorporated, if necessary. Moreover, into the above oily (O) phase components, a solvent, a resin, a coloring agent, an emulsifier, and the like may be incorporated, if necessary. By the way, the aqueous phase components described in the present invention means total components of the aqueous phase containing the water-soluble additives as above added according to need, but the emulsifier present at the interface between the oily phase and the aqueous phase is not considered as an aqueous phase component.

In the present invention, the surface tension of the aqueous (W) phase (the value at 23°C, the same shall apply to the following) is in a range of 35 to 55 mN/m, preferably 40 to 50 mN/m. When the surface tension of the aqueous phase is higher than 55 mN/m, there is observed a tendency towards a slow drying rate due to the slow sinking rate of the aqueous phase. When the surface tension of the aqueous phase is lower than 35 mN/m, there is observed a tendency to blurs occurs in printed articles due to the fast sinking rate of the aqueous phase and the stability of the emulsion decreases.

As a component lowering the surface tension of the aqueous phase of the emulsion ink for stencil printing of the present invention, one or more of monohydric alcohols may be mentioned.

The component lowering the surface tension may be added in a suitable amount so that the surface tension of the aqueous phase (W) becomes from 35 to 55 mN/m. The total mixing amount of monohydric alcohols is in the range of preferably 5 to 50% by weight, more preferably 5 to 30% by weight relative to the total amount of the aqueous phase.

Specifically, in the case of primary monohydric alcohols, preferred are methanol, ethanol, and 1-propanol, which are highly soluble in water. Since a primary alcohol itself has a surface tension at room temperature of 24.5 mN/m or less, these alcohols are suitable for lowering the surface tension of the aqueous phase. When each compound is used solely, it is preferable to add the compound in an amount of 10 to 50%(relative to the total amount of the aqueous phase) by weight in the case of methanol, 5 to 30% by weight in the case of ethanol, or 5 to 20% by weight in the case of 1-propanol. These may be used solely or in combination.

In the case that the surface tension of the aqueous phase exceeds 55 mN/m owing to a small total mixing amount of monohydric alcohols, the monohydric alcohols are effective in preventing the evaporation and freezing of water as described in Japanese Patent Application Laid-Open No. 17214/2000. However, such surface tension tends to cause an insufficient drying ability of the ink, especially the sinking of the aqueous components in the ink into paper. Contrary, when the surface tension of the aqueous phase is less than 35 mN/m owing to a high proportion of the total monohydric alcohols, the storage stability of the ink tends to deteriorate.

Like primary monohydric alcohols, secondary and tertiary monohydric alcohols can also be used as the surface tension-lowering agents of the aqueous phase. Examples of the secondary and tertiary monohydric alcohols include 2-propanol and tert-butyl alcohol. In the case of using these alcohols solely, the addition of 5 to 20% by weight of them relative to the total amount of the aqueous phase results in an effect of lowering the surface tension equal to the effect in the case of primary monohydric alcohols.

Since the surface tension of a polyhydric alcohol itself is high, the alcohol alone has a little ability to lower the surface tension of the aqueous phase. When the surface tension of the ink is intended to lower to 55 mN/m or less, a polyhydric alcohol should be added in an amount of 40% by weight or more relative to the total amount of the aqueous phase. In this case, the drying ability and storage stability tend to deteriorate. However, when a small amount of a polyhydric alcohol is used in combination with a monohydric alcohol having 3 or less carbon atoms, the surface tension of the aqueous phase can be lowered to 55 mN/m or less. The amount of the polyhydric alcohol to be added at that time is preferably 15% by weight or less relative to the total amount of the aqueous phase.

When a monohydric primary alcohol having 4 or more carbon atoms is used, the use of only small amount thereof can largely lower the surface tension of the aqueous phase. However, the solubility of the monohydric primary alcohol having 4 or more carbon atoms itself in the aqueous phase is less than 10% by weight and the affinity to the oily phase components is high. Therefore, most of the alcohol transfers to the oily phase and decreases the storage stability of the emulsion ink in some cases.

In the case of an unsaturated monohydric alcohol, the alcohol having a high solubility in water exhibits an effect of lowering the surface tension of the aqueous phase as in the case of the saturated monohydric alcohol. However, an unsaturated monohydric alcohol has a higher affinity to the oily phase, it is necessary to select a suitable one with attention paid to this point. Examples of such an unsaturated monohydric alcohol include allyl alcohol and propargyl alcohol.

As the component lowering the surface tension of the aqueous phase, preferably at least one compound is suitably selected from the above group consisting of methanol, ethanol, 1-propanol, 2-propanol, and tert-butyl alcohol.

Into the aqueous phase (W), in addition to the above surface tension-lowering component, water-soluble additives such as an electrolyte, a pH regulator, a wetting agent, a water-evaporation retardant, and an antifreezing agent may be incorporated. For example, as the electrolyte and pH regulator, sodium sulfate, magnesium sulfate, potassium hydrogen phosphate, sodium citrate, potassium tartrate, and sodium borate are used. These inorganic salts hardly influence the lowering of the surface tension of the aqueous phase as compared with monohydric alcohols.

A water-soluble organic solvent is preferably used as the wetting agent, water-evaporation retardant, antifreezing agent, and the like to be incorporated into the aqueous phase (W). Examples of the water-soluble organic solvent include polyhydric alcohols such as ethylene glycol, propylene glycol, diethylene glycol, polyethylene glycol, and glycerin; polyhydric alcohol alkyl ethers such as ethylene glycol monoethyl ether and triethylene glycol monoethyl ether; and triethanolamine. Since the addition of a large amount thereof results in the deterioration of drying ability of the ink at printing, it is preferable to use the same in an amount of about 2 to 10% by weight relative to the total amount of the ink.

Furthermore, to the aqueous phase (W) are added water-soluble additives such as a water-soluble resin, a fungicide, and an antioxidant, if necessary. Examples of the water-soluble resin include polyvinyl alcohol, methyl cellulose, carboxymethyl cellulose, hydroxymethyl cellulose, polyvinylpyrrolidone, polyethylene-polyvinyl alcohol copolymer, polyethylene oxide, polyvinyl ethers, polyacrylamide, gum arabic, starch, and water-soluble urethanes. The water-soluble resin increases the surface tension of the aqueous phase, and hence is preferably added in a minimum amount required.

Examples of the fungicide include aromatic hydroxy compounds and chlorinated compounds thereof, phenols and derivatives thereof, sorbic acid, salicylic acid, and p-hydroxybenzoic acid and derivatives thereof.

Examples of the antioxidant include 2,6-di-tert-butyl-4-cresol, 2,6-di-tert-butyl-4-methylphenol commonly known as BHT, hydroquinone, and tert-butyl-hydroquinone commonly known as TBHQ. As the antioxidant, any composition hitherto known may be employed.

Moreover, these water-soluble additives are usually used as a solution or a homogeneous dispersion into the aqueous phase, and also used as a homogeneous dispersion into the oily phase.

Examples of the solvent for the oily phase (O) components include petroleum solvents such as Ink Solvent 240 (boiling point: 242-260°C, manufactured by Nisseki Mitsubishi Co., Ltd.), Nisseki Mitsubishi Isozole 400 (boiling point: 206-257°C, manufactured by Nisseki Mitsubishi Co., Ltd.), and AF No.4 Solvent (boiling point: 206-267°C, manufactured by Nisseki Mitsubishi Co., Ltd.).

The resin to be incorporated in the oily phase (O) components is not particularly limited as far as it has compatibility and homogeneous dispersibility with the coloring agent and other oily phase components. Examples of the resin include phenol resins, maleic resins, petroleum resins, alkyd resins, rosin-modified phenol resins, resins of rubber derivatives, and the like.

As the coloring agent for the oily phase (O) components, those generally used in the technical field of printing including inorganic pigments and organic pigments can be used. Examples of these coloring agents include furnace carbon black, lamp black, brilliant first scarlet, cadmium red, molybdenum red, chromium yellow, cadmium yellow, titanium yellow, chromium oxide, viridian, titanium cobalt green, ultramarine blue, Prussian blue, cobalt blue, azo pigments, phthalocyanine pigments, quinacridone pigments, isoindolinone pigments, dioxazine pigments, threne pigments, perylene pigments, perynone pigments, thioindigo pigments, quinophthalone pigments, and metal complex pigments.

Other than the above, a pigment-dispersing agent, an antioxidant, a compound containing a wax or the like as a main component as an auxiliary agent for adjusting the flowability may be added to the oily phase in the present invention in such an amount range that the formation and stability of the emulsion are not inhibited.

As the emulsifier at the production of the W/O type emulsion, a nonionic surfactant is preferred. Examples of the emulsifier include sorbitan higher fatty acid esters (sorbitan monolaurate, sorbitan monopalmitate, sorbitan monostearate, sorbitan tristearate, sorbitan monooleate, sorbitan trioleate, sorbitan sesquioleate, etc.), fatty acid monoglycerides (oleic acid monoglyceride, oleic acid diglyceride, etc.), and ethylene oxide adducts of higher alcohols, alkylphenols, fatty acids, and the like. For obtaining a stable W/O type emulsion ink, it is preferable to select suitably a nonionic surfactant, HLB and the like of the aqueous phase being taken into consideration.

The emulsion ink for stencil printing of one embodiment of the present invention is preferably a W/O type ink which comprises 10 to 70% by weight of an oily phase and 90 to 30% by weight of an aqueous phase.

The emulsion ink for stencil printing of one embodiment of the present invention dries through the sinking and evaporation of the moisture in the W/O type ink printed on printed articles. Therefore, according to one embodiment of the present invention, the drying ability of the printed characters and the like is enhanced and the handleability of the printed articles is also improved.

The following will explain the present invention in more detail with reference to Examples but the invention is not limited thereto. By the way, "part(s)" in Examples means "part(s) by weight".

It should be understood that the foregoing relates to only a preferred embodiment of the invention, and it is intended to cover all changes and modifications of the examples of the invention herein chosen for the purposes of the disclosure, which do not constitute departures from the sprit and scope of the invention.

### Example 1

To 17.0 parts of an alkyd resin were added 7.0 parts of Ink Solvent 240 (boiling point: 242-260°C, manufactured by Nisseki Mitsubishi Co., Ltd.) and 2.0 parts of oleic acid monoglyceride as a surfactant to obtain a mixture. Then, to the mixture were dispersed 5.5 parts of copper phthalocyanine blue as a pigment and 0.5 part of organic bentonite as a viscosity regulator to obtain an oily phase.

Separately, 16.0 parts of methanol was added to a solution obtained by dissolving 5.5 parts of ethylene glycol and 1.0 part of magnesium sulfate heptahydrate in 45.5 parts of ion-exchanged water, whereby an aqueous phase was obtained. To 32.0 parts in total of the above oily phase was little by little added 68.0 parts in total of the above aqueous phase under stirring by means of a stirrer to emulsify the whole, whereby a water-in-oil type emulsion ink for stencil printing was obtained.

### Example 2

To 7.0 parts of AF No. 4 Solvent (boiling point: 206-267°C, manufactured by Nisseki Mitsubishi Co., Ltd.) was added 18.0 parts of a phenol resin, and the resin was dissolved under heating to prepare a varnish.

After the above varnish was cooled on standing, 2.0 parts of sorbitan monooleate as a surfactant was added thereto and then, 6.5 parts of furnace black as a pigment was dispersed thereinto to obtain an oily phase.

Separately, 12.0 parts of ethanol was added to a solution obtained by dissolving 10.0 parts of ethylene glycol and 1.0 part of magnesium sulfate heptahydrate in 43.5 parts of ion-exchanged water, whereby an aqueous phase was obtained.

To 33.5 parts in total of the above oily phase was added 66.5 parts in total of the above aqueous phase, and the whole was emulsified to obtain a water-in-oil type emulsion ink for stencil printing.

### Example 3

To 18.0 parts of an alkyd resin were added 7.5 parts of Ink Solvent 240 (boiling point: 242-260°C, manufactured by Nisseki Mitsubishi Co., Ltd.) and 2.0 parts of sorbitan monooleate as a surfactant to obtain a mixture. To the mixture was dispersed 6.5 parts of a pigment (furnace black) to obtain an oily phase.

Separately, 10.0 parts of 2-propanol was added to a solution obtained by dissolving 5.5 parts of glycerin and 1.0 part of magnesium sulfate heptahydrate in 49.5 parts of ion-exchanged water, whereby an aqueous phase was obtained.

To 34.0 parts in total of the above oily phase was added 66.0 parts in total of the above aqueous phase, and the whole was emulsified to form a water-in-oil type emulsion ink for stencil printing.

### Example 4

As an oily phase, the same as in Example 1 was used. Separately, 10.0 parts of methanol was added to a solution obtained by dissolving 5.5 parts of glycerin and 1.0 part of magnesium sulfate heptahydrate in 51.5 parts of ion-exchanged water, whereby an aqueous phase was obtained.

To 32.0 parts in total of the above oily phase was added 68.0 parts in total of the above aqueous phase, and the whole was emulsified to form a water-in-oil type emulsion ink for stencil printing.

### Example 5

As an oily phase, the same as in Example 3 was used.

Separately, a solution was prepared by dissolving 50.0 parts of diethylene glycol and 1.0 part of magnesium sulfate heptahydrate in 15.0 parts of ion-exchanged water, whereby an aqueous phase was obtained.

To 34.0 parts in total of the above oily phase was added 66.0 parts in total of the above aqueous phase, and the whole was emulsified to obtain a water-in-oil type emulsion ink for stencil printing.

### Example 6

As an oily phase, the same as in Example 2 was used.

Separately, 4.5 parts of methanol and 10.0 parts of ethanol were added to a solution obtained by dissolving 5.5 parts of ethylene glycol and 1.0 part of magnesium sulfate heptahydrate in 45.5 parts of ion-exchanged water, whereby an aqueous phase was obtained.

To 33.5 parts in total of the above oily phase was added 66.5 parts in total of the above aqueous phase, and the whole was emulsified to obtain a water-in-oil type emulsion ink for stencil printing.

### Comparative Example 1

As an oily phase, the same as in Example 2 was used.

Separately, 16.0 parts of 2-propanol was added to a solution obtained by dissolving 5.5 parts of glycerin and 1.0 part of magnesium sulfate heptahydrate in 44.0 parts of ion-exchanged water, whereby an aqueous phase was obtained.

To 33.5 parts in total of the above oily phase was added 66.5 parts in total of the above aqueous phase, and the whole was emulsified to obtain a water-in-oil type emulsion ink for stencil printing.

### Comparative Example 2

As an oily phase, the same as in Example 3 was used.

Separately, 6.0 parts of methanol was added to a solution obtained by dissolving 5.5 parts of ethylene glycol and 1.0 part of magnesium sulfate heptahydrate in 53.5 parts of ion-exchanged water, whereby an aqueous phase was obtained.

To 34.0 parts in total of the above oily phase was added 66.0 parts in total of the above aqueous phase, and the whole was emulsified to obtain a water-in-oil type emulsion ink for stencil printing.

### Comparative Example 3

As an oily phase, the same as in Example 3 was used.

Separately, a solution was prepared by dissolving 9.5 parts of ethylene glycol and 1.0 part of magnesium sulfate heptahydrate in 55.5 parts of ion-exchanged water, whereby an aqueous phase was obtained.

To 34.0 parts in total of the above oily phase was added 66.0 parts in total of the above aqueous phase, and the whole was emulsified to obtain a water-in-oil type emulsion ink for stencil printing.

Each composition (unit: part(s) by weight) of water-in-oil type emulsion inks in the above Examples and Comparative Examples is shown in Table 1.

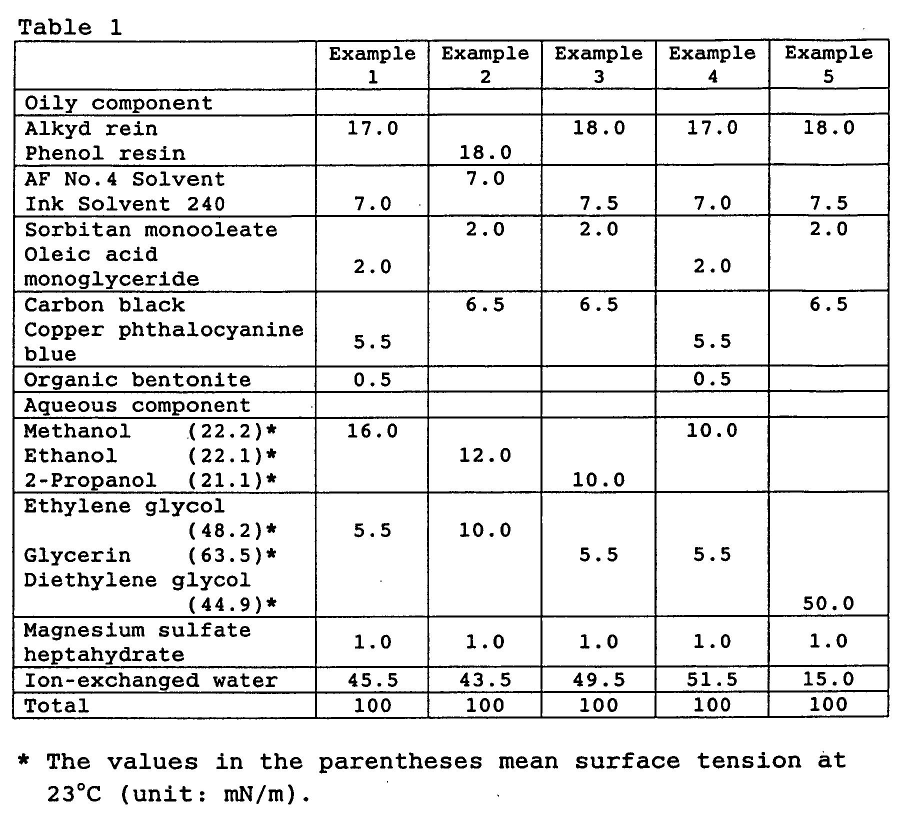

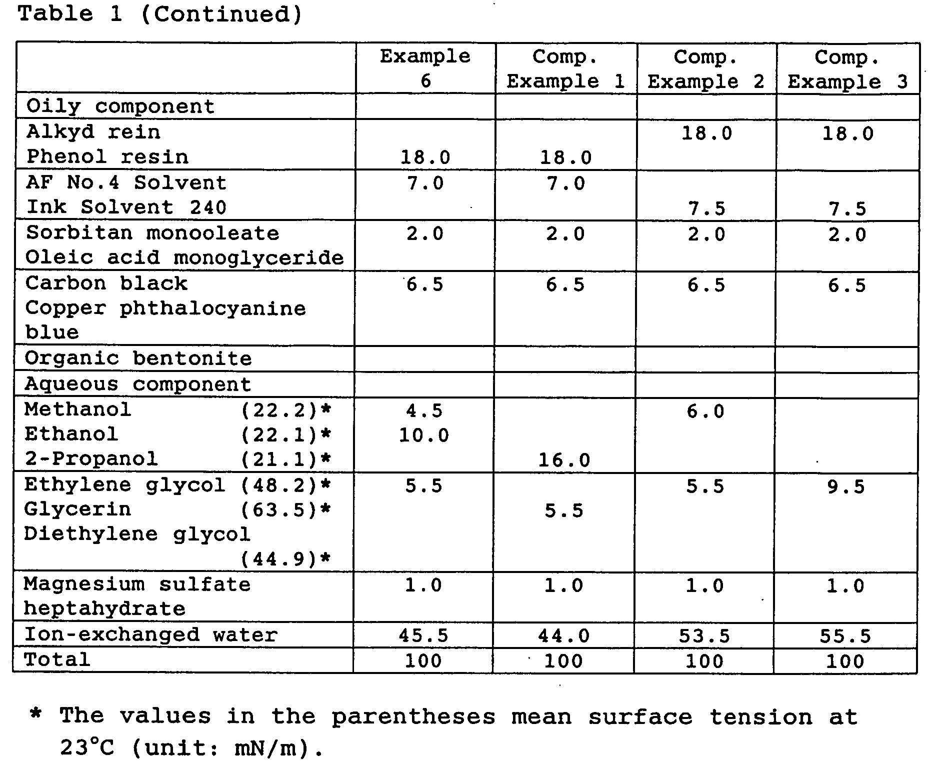

The surface tension of the aqueous phase, drying ability, blur, storage stability of the emulsion inks obtained in the above Examples and Comparative Examples were evaluated by the following methods. The evaluation results are shown in Table 2.
(1) Surface tension of the aqueous phase: The prepared aqueous phase before emulsification was subjected to measurement on an automatic tensiometer (CBVP-Z type) manufactured by Kyowa Kaimen Kagaku Co., Ltd.
(2) Drying ability: Using the emulsion inks thus obtained, printing was conducted by means of RISOGRAPH (registered trademark of Riso Kagaku Kogyo Co., Ltd.) GR375 (manufactured by the company) as a stencil printing machine to obtain printed articles. The dryness of the ink-transferred surface of the printed articles after one minute of the printing was determined by examination of touching with a finger, and evaluated as follows.
   ○: The finger is not at all stained.
   Δ: The finger is slightly stained with the ink.
   ×: When the character part is touched with a finger, the ink characters attached to the finger can be read off.
(3) Blur: An outline of the characters printed in the above (2) was observed after one minute of the printing.
   ○: No blurring of the outline of the characters was observed.
   ×: The outline of the characters was blurred.
(4) Storage stability: The emulsion inks thus obtained were allowed to stand at room temperature for 1 month and then the stability of the emulsions was examined visually and evaluated as follows.
   ○: No separation of the aqueous phase and the oily phase occurs and the viscosity decrease of the emulsion ink is less than 10% as compared with the initial viscosity.
   Δ: No separation of the aqueous phase and the oily phase occurs but the viscosity decrease of the emulsion ink is 10% or more as compared with the initial viscosity.
   ×: The separation of the aqueous phase and the oily phase occurs.

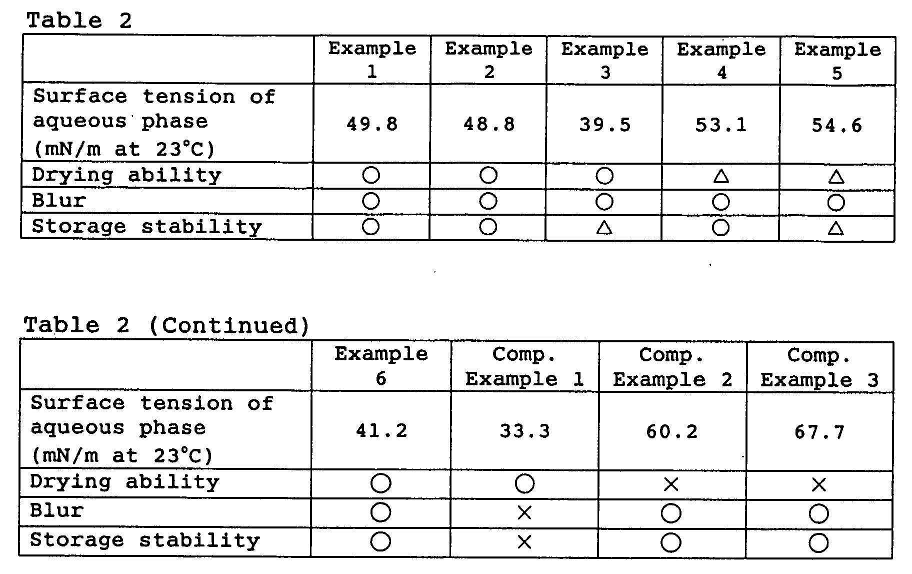

According to the present Examples, the sinking of the emulsion ink for stencil printing into a print media is improved and the evaporating ability of the aqueous phase of the ink after the transfer onto the print media is enhanced. Thereby, the drying time of the ink after printing can be shortened and the handleability of the printed articles can be improved.

## Claims

1. A water-in-oil type emulsion ink for stencil printing comprising an oily phase and an aqueous phase, wherein the surface tension of the aqueous phase at 23°C is in a range of 35 to 55 mN/m.

2. The emulsion ink for stencil printing according to claim 1, wherein 5 to 50% by weight of the total amount of the aqueous phase is composed of one or more of monohydric alcohols.

3. The emulsion ink for stencil printing according to claim 2, wherein the monohydric alcohol is at least one selected from the group consisting of methanol, ethanol, 1-propanol, 2-propanol, and tert-butyl alcohol.

4. The emulsion ink for stencil printing according to claim 1, which comprises 10 to 70% by weight of the oily phase and 90 to 30% by weight of the aqueous phase.

5. The emulsion ink for stencil printing according to claim 2, which comprises 10 to 70% by weight of the oily phase and 90 to 30% by weight of the aqueous phase.

6. The emulsion ink for stencil printing according to claim 3, which comprises 10 to 70% by weight of the oily phase and 90 to 30% by weight of the aqueous phase.
